# FASCICULE DE BREVET EUROPEEN

(11) **EP 0 821 201 B1**
(45) Date de publication et mention de la délivrance du brevet: **27.08.2003**
(21) Numéro de dépôt: 97401774.1
(22) Date de dépôt: 24.07.1997
(51) Int. Cl.: F23R 3/00, F23R 3/26

(54) **Ensemble bol-déflecteur pour chambre de combustion de turbomachine**
Luftleitblech-Deflektor für die Brennkammer einer Gasturbine
Screen-deflector assembly for the combustion chamber of a gas turbine

(30) Priorité: 25.07.1996 FR 9609363
(43) Date de publication de la demande: 28.01.1998
(73) Titulaire: SNECMA MOTEURS, 75015 Paris (FR)
(72) Inventeur: Sandelis, Denis, 77370 - Nangis (FR)
(74) Mandataire: Berrou, Paul

(56) Documents cités:
- EP-A- 0 182 687
- EP-A- 0 214 003
- EP-A- 0 471 438
- GB-A- 2 173 891
- US-A- 5 220 786

## Description

La présente invention concerne le domaine des chambres de combustion des turbomachines aéronautiques, comme décrit dans EP 0 182 687A.

Elle concerne plus précisément une chambre de combustion de turbomachine comportant en aval un fond de chambre qui présente au moins une ouverture destinée à recevoir un bol annulaire dans l'axe duquel est monté un dispositif d'injection d'air et de carburant, ledit bol étant évasé dans le sens de l'écoulement des gaz et comportant des moyens pour refroidir sa collerette ainsi qu'une première rangée d'orifices, au voisinage de ladite collerette, pour injecter de l'air dans le cône de carburant pulvérisé, chambre dans laquelle un déflecteur est disposé autour de la collerette du bol en aval du fond de chambre, ce déflecteur formant un bouclier thermique et étant refroidi par impact au moyen d'un air de refroidissement issu d'une pluralité de perforations ménagées dans le fond de chambre.

Dans les chambres de combustion de ce type, notamment les chambres des turboréacteurs à usage militaire, les bols et les déflecteurs ou coupelles équipant les fonds de chambre sont particulièrement sollicités.

Compte tenu de l'évolution des turboréacteurs, l'air est de plus en plus comprimé, ce qui entraîne une augmentation de la pression et de la température en entrée de la chambre de combustion. Cette augmentation de pression et température associée à une élévation de la température des gaz dans la chambre, entraîne des sollicitations thermiques et mécaniques très importantes des éléments du fond de chambre. Ainsi, la paroi de la collerette du bol est soumise à des températures excessives comprises entre 900°C et 1000°C. D'autre part cette collerette n'est refroidie que par 2% environ du débit d'air introduit dans la chambre.

On constate également des brûlures et des déformations sur les bords extérieurs des déflecteurs qui délimitent avec les viroles externe et interne un passage pour l'air de refroidissement, ce qui entraîne une détérioration du film de refroidissement du fond de chambre, préjudiciable a une bonne tenue de la chambre de combustion.

Le but de la présente invention est de pallier à ces inconvénients. L'invention atteint son but par le fait que
a/ le bol et le déflecteur sont réalisés en une seule pièce,
b/ le bol est constitué d'une double peau délimitant une cavité annulaire alimentée en air par une pluralité d'orifices ménagés en face de la zone de jonction du déflecteur et du bol dans la peau située à l'extérieur de la chambre de combustion, afin que cet air refroidisse par impacts ladite zone de jonction, puis s'évacue dans la chambre de combustion, pour une première partie, par la première rangée d'orifices, et, pour une deuxième partie, par une deuxième rangée d'orifices ménagés dans la partie radialement intérieure de la peau située à l'intérieur de la chambre de combustion, cette deuxième partie d'air participant à la pulvérisation du carburant.

Grâce à cette technologie, le bol et le déflecteur se présentent sous la forme d'un ensemble compact solidaire du fond de chambre au lieu d'un bol avec collerette et d'une coupelle montée librement sur le fond de chambre.

L'invention assure en outre un meilleur refroidissement au niveau de la jonction de bol et du déflecteur, car tout l'air qui pénètre par la première rangée d'orifices (environ 6% du débit d'air introduit dans la chambre de combustion) et tout l'air qui pénètre par la deuxième rangée d'orifices (environ 4% du débit d'air introduit dans la chambre de combustion), participe au refroidissement de cette région, au lieu de 2% du débit d'air introduit dans une chambre de combustion traditionnelle.

En outre, on obtient une meilleure vaporisation du carburant, car l'air qui pénètre dans la chambre par la deuxième rangée d'orifices est échauffée par suite de sa circulation le long des parois internes du bol.

Les avantageuses dispositions suivantes sont en outre adoptées
- la paroi interne de la double peau est hérissée de perturbateurs d'écoulement afin de favoriser l'échange thermique;
- le déflecteur comporte une pluralité de perforations radialement divergentes par rapport à l'axe du bol;
- la paroi du déflecteur située du côté de l'enceinte de combustion est revêtue d'une d'arrière thermique, réalisée de préférence en zirconate d'Yttrium;
- le déflecteur comporte des moyens pour la fixation de l'ensemble bol-déflecteur sur le fond de chambre.

D'autres avantages et caractéristiques de l'invention ressortiront à la lecture de la description suivante faite à titre d'exemple et en référence aux dessins annexés dans lesquels :
- la figure 1 est une demi-coupe du fond d'une chambre de combustion, équipé d'un ensemble bol-déflecteur selon la présente invention, cette demi-coupe étant prise selon un plan longitudinal passant par l'axe de symétrie de ladite chambre de combustion et l'axe de symétrie d'un dispositif d'injection d'air et de carburant;
- la figure 2 est une vue frontale de l'ensemble bol-déflecteur représenté sur la figure 1, cette vue étant prise de l'intérieur de la chambre de combustion;
- la figure 3 est une demi-coupe de l'ensemble bol-déflecteur selon l'invention, selon la ligne III III de la figure 2.

Sur le dessin on a représenté par la référence 2 un fond de chambre qui délimite avec une virole externe et une virole interne, non représentées, une enceinte 3 d'une chambre de combustion annulaire d'une turbomachine. Ce fond 2 présente une pluralité d'ouvertures 4 régulièrement réparties autour de l'axe de symétrie de la chambre de combustion et destinées à recevoir chacune un bol annulaire 6 dans l'axe 7 duquel est monté un dispositif d'injection d'air et de carburant représenté par la référence 8.

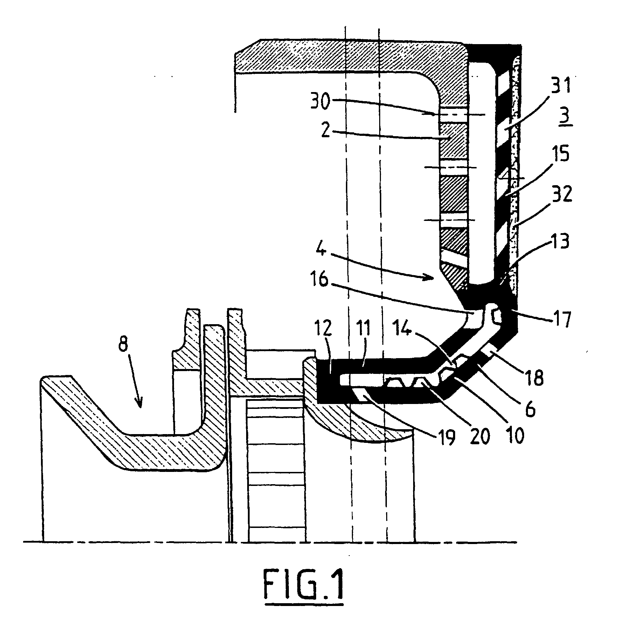

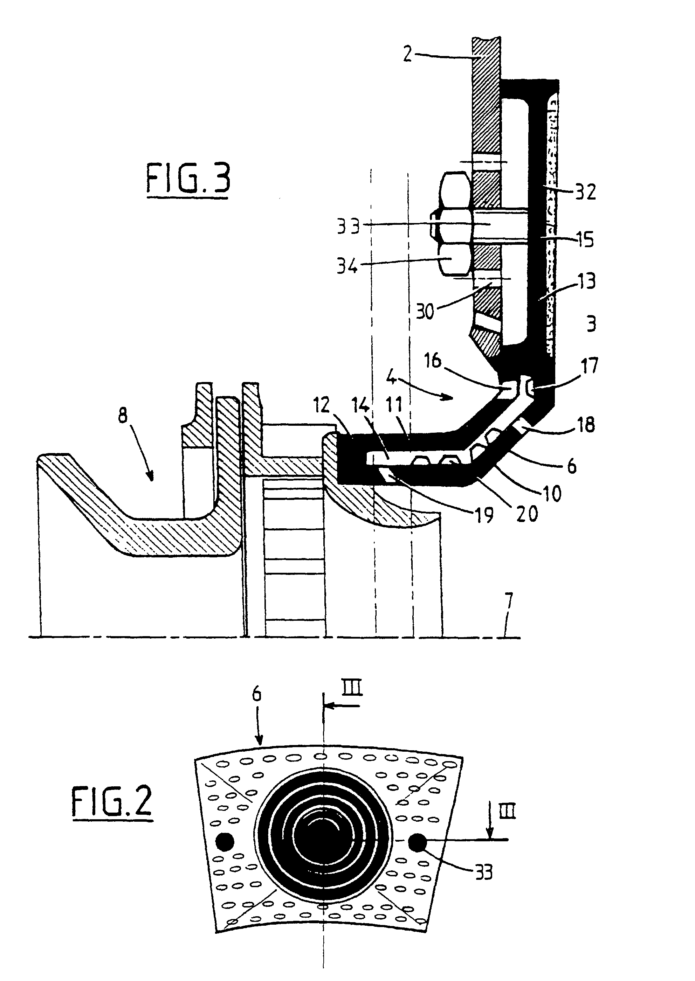

Le bol 6 est évasé dans le sens de l'écoulement des gaz, c'est-à-dire de gauche à droite sur les figures 1 et 3, et il est constitué d'une peau intérieure 10 et d'une peau extérieure 11, reliées en amont par une paroi frontale 12 et en aval par une paroi 13 en appui sur le bord de l'ouverture 4, et qui délimitent entre elles une cavité annulaire 14, dont l'utilité sera expliquée plus loin dans le présent mémoire.

La peau intérieure 10 se prolonge au delà de la paroi d'appui 13, pour constituer un déflecteur 15 disposé parallèlement au fond de chambre 2 et à une certaine distance en aval de ce dernier.

Le bol 6 et le déflecteur 15 constituent une seule pièce réalisée, par exemple, en fonderie, ce qui a pour avantage de réduire les coûts de fabrication de l'ensemble.

Ainsi qu'on le voit clairement sur les figures 1 et 3, la peau extérieure 11 présente une pluralité d'orifices 16 en face de la zone de jonction 17 du bol 6 et du déflecteur 15, par lesquels de l'air de refroidissement pénètre dans la cavité 14 et frappe cette zone de jonction 17 qui constitue ce que l'on dénomme habituellement la collerette du bol 6.

Cet air sort de la cavité 14, par une première rangée d'orifices 18 ménagé dans la peau intérieure 10 au voisinage de la collerette 17, et par une deuxième rangée d'orifices 19 ménagés dans la peau intérieure 10 au voisinage de la paroi frontal 12.

Environ 10% de l'air total alimentant la chambre de combustion est introduit par les orifices 16 et participe au refroidissement de la collerette. 60% de l'air transitant par la cavité 14, sort par les orifices 18 pour être injecté dans le cône de carburant. Le reste (40%) de l'air transitant par la cavité 14 sort par les orifices 19, à l'état réchauffé et participe activement à la pulvérisation du carburant. Afin de favoriser le refroidissement du bol 6 les parois internes des peaux 10 et 11 sont hérissés de perturbateurs d'écoulement 20.

Ces perturbateurs 20 se présentent sous la forme de picots, pontets ou autres.

Le fond de chambre 2 comporte une pluralité d'orifices 30 sensiblement parallèles à l'axe 7, l'air introduit par ces orifices 30 refroidit par impacts le déflecteur 15. Une autre multiperforation 31 disposée en quinconce par rapport à la multiperforation 30 du fond de chambre 2 est pratiquée dans le déflecteur 15. Cette multiperforation 31 est fortement inclinée par rapport à la précédente. L'angle des axes des orifices 31 par rapport à l'axe 7 est de 70° environ. Cette inclination permet une initialisation du film de refroidissement du fond de chambre 2 vers les viroles externe et interne.

La paroi du déflecteur 15 en contact avec l'intérieur de la chambre de combustion est revêtue d'une barrière thermique 32 réalisée par exemple en zirconate d'Yttrium.

Le déflecteur 15 est rendu solidaire du fond de chambre 2 par un système de goujons filetés 33 et d'écrous 34. Les goujons 33 sont réalisés de préférence en fonderie en même temps que l'ensemble bol 6 et déflecteur 15.

## Revendications

1. Chambre de combustion de turbomachine comportant en aval un fond de chambre (2) qui présente au moins une ouverture (4) destinée à recevoir un bol annulaire (6) dans l'axe (7) duquel est monté un dispositif (8) d'injection d'air et de carburant, ledit bol (6) étant évasé dans le sens de l'écoulement des gaz et comportant des moyens pour refroidir sa collerette (17) ainsi qu'une première rangée d'orifices (18), au voisinage de ladite collerette (17), pour injecter de l'air dans le cône de carburant pulvérisé, chambre dans laquelle un déflecteur (15) est disposé autour de la collerette (17) du bol (6) en aval du fond de chambre (2), ce déflecteur (15) formant un bouclier thermique et étant refroidi par impact au moyen d'un air de refroidissement issu d'une pluralité de perforations (30) ménagées dans le fond de chambre (2),
**caractérisée par le fait que**
a/ le bol (6) et le déflecteur (15) sont réalisés en une seule pièce,
b/ le bol (6) est constitué d'une double peau (10, 11) délimitant une cavité annulaire (14) alimentée en air par une pluralité d'orifices ménagés en face de la zone de jonction (17) du déflecteur (15) et du bol (6) dans la peau (11) située à l'extérieur de la chambre de combustion, afin que cet air refroidisse par impacts ladite zone de jonction (17), puis s'évacue dans la chambre de combustion, pour une première partie, par la première rangée d'orifices (18), et, pour une deuxième partie, par une deuxième rangée d'orifices (19) ménagés dans la partie radialement intérieure de la peau (10) située à l'intérieur de la chambre de combustion, cette deuxième partie d'air participant à la pulvérisation du carburant.

2. Chambre de combustion selon la revendication 1, **caractérisée par le fait que** la paroi interne de la double peau (10, 11) est hérissée de perturbateurs d'écoulement (20) afin de favoriser l'échange thermique.

3. Chambre de combustion selon l'une des revendications 1 ou 2, **caractérisée par le fait que** le déflecteur (15) comporte une pluralité de perforations (31) radialement divergentes par rapport à l'axe (7) du bol (6).

4. Chambre de combustion selon l'une quelconque des revendications 1 à 3, **caractérisée par le fait que** la paroi du déflecteur (15) située du côté de l'enceinte de combustion (3) est revêtue d'une barrière thermique (32).

5. Chambre de combustion selon la revendication 4, **caractérisée par le fait que** la barrière thermique (32) est réalisée en zirconate d'Yttrium.

6. Chambre de combustion selon l'une quelconque des revendications 1 à 5, **caractérisée par le fait que** le déflecteur (15) comporte des moyens (33, 34) par la fixation de l'ensemble bol-déflecteur sur le fond de chambre (2).

## Patentansprüche

1. Brennkammer eines TL-Triebwerks, die hinten einen Kammerboden (2) enthält, der mindestens eine Öffnung (4) aufweist, die dazu bestimmt ist, eine ringförmige Schüssel (6) aufzunehmen, an deren Achse (7) eine Luft- und Brennstoffeinspritzvorrichtung (8) angebracht ist, wobei diese Schüssel (6) sich in Strömungsrichtung der Gase erweitert und Mittel aufweist, um seinen Flansch (17) zu kühlen, sowie eine erste Reihe von Öffnungen (18) in der Nähe dieses Flanschs (17) aufweist, um Luft in den Kegel von zerstäubtem Brennstoff einzuspritzen, wobei hinter dem Kammerboden (2) ein Deflektor (15) um den Flansch (17) der Schüssel (6) herum angeordnet ist, wobei dieser Deflektor (15) ein Wärmeschild bildet und durch Auftreffen einer Kühlungsluft gekühlt wird, die aus einer Vielzahl von Durchbohrungen (30) kommt, die in dem Kammerboden (2) ausgeführt sind,
**dadurch gekennzeichnet,**
**dass**
a) die Schüssel (6) und der Deflektor (15) aus einem einzigen Stück hergestellt sind,
b) die Schüssel (6) aus einer doppelten Haut (10, 11) besteht, die einen ringförmigen Hohlraum (14) umgrenzt, der durch eine Vielzahl von Öffnungen, die gegenüber dem Verbindungsbereich (17) des Deflektors (15) und der Schüssel (6) in der Haut (11) außerhalb der Brennkammer ausgeführt sind, mit Luft versorgt wird, so dass diese Luft durch Auftreffen diesen Verbindungsbereich (17) kühlt, dann in die Brennkammer entweicht, und zwar mit einem ersten Teil durch die erste Reihe von Öffnungen (18) und mit einem zweiten Teil durch eine zweite Reihe von Öffnungen (19), die in dem radial inneren Teil der Haut (10) ausgeführt sind, die sich im Inneren der Brennkammer befindet, wobei dieser zweite Teil Luft an der Zerstäubung des Brennstoffs beteiligt ist.

2. Brennkammer nach Anspruch 1,
**dadurch gekennzeichnet,**
**dass** die Innenwand der doppelten Haut (10, 11) mit Strömungsstörelementen (20) gespickt ist, um den Wärmetausch zu unterstützen.

3. Brennkammer nach einem der Ansprüche 1 oder 2,
**dadurch gekennzeichnet,**
**dass** der Deflektor (15) eine Vielzahl von Durchbohrungen (31) enthält, die bezogen auf die Achse (7) der Schüssel (6) radial divergieren.

4. Brennkammer nach einem der Ansprüche 1 bis 3,
**dadurch gekennzeichnet,**
**dass** die zu dem Verbrennungsraum (3) hin gelegene Wand des Deflektors (15) mit einer Wärmesperrschicht (32) überzogen ist.

5. Brennkammer nach Anspruch 4,
**dadurch gekennzeichnet,**
**dass** die Wärmesperrschicht (32) aus Yttriumzirkonat hergestellt ist.

6. Brennkammer nach einem der Ansprüche 1 bis 5,
**dadurch gekennzeichnet,**
**dass** der Deflektor (15) Mittel (33, 34) zur Befestigung der Gesamtanordnung Schüssel-Deflektor an dem Kammerboden (2) enthält.

## Claims

1. Turboshaft engine combustion chamber comprising, downstream, a chamber bottom (2) which has at least one opening (4) intended to receive an annular bowl (6) in the axis (7) of which is mounted an air and fuel injection device (8), the said bowl (6) being flared in the direction of the flow of gases and comprising means of cooling its collar (17), and a first row of orifices (18), in the vicinity of the said collar (17), for injecting air into the cone of sprayed fuel, in which chamber a deflector (15) is disposed around the collar (17) of the bowl (6) downstream of the chamber bottom (2), this deflector (15) forming a heat shield and being cooled by impact by means of cooling air coming from a plurality of perforations (30) formed in the chamber bottom (2),
**characterized in that**
a/ the bowl (6) and the deflector (15) are produced as a single part,
b/ the bowl (6) is constituted by a double skin (10, 11) delimiting an annular cavity (14) fed with air through a plurality of orifices formed facing the junction zone (17) of the deflector (15) and the bowl (6) in the skin (11) located outside of the combustion chamber, in order that this air may cool the said junction zone (17) by impacts, and then be evacuated into the combustion chamber, for a first portion through the first row of orifices (18) and for a second portion through a second row of orifices (19) formed in the radially inner section of the skin (10) located inside the combustion chamber, this second portion of air participating in the spraying of the fuel.

2. Combustion chamber according to Claim 1, **characterized in that** the internal surface of the double skin (10, 11) is roughened by flow spoilers (20) in order to favour heat exchange.

3. Combustion chamber according to either of Claims 1 and 2, **characterized in that** the deflector (15) comprises a plurality of perforations (31) that are radially divergent with respect to the axis (7) of the bowl (6).

4. Combustion chamber according to any one of Claims 1 to 3, **characterized in that** the surface of the deflector (15) located on the side facing the combustion enclosure (3) is coated with a heat barrier (32).

5. Combustion chamber according to Claim 4, **characterized in that** the heat barrier (32) is made of yttrium zirconate.

6. Combustion chamber according to any one of Claims 1 to 5, **characterized in that** the deflector (15) coprises means (33, 34) for attaching the bowl/deflector assembly to the chamber bottom (2).
